# EUROPÄISCHE PATENTSCHRIFT

(11) **EP 1 877 269 B1**
(45) Veröffentlichungstag und Bekanntmachung des Hinweises auf die Patenterteilung: **20.07.2011**
(21) Anmeldenummer: 06707109.2
(22) Anmeldetag: 21.02.2006
(51) Int. Cl.: B60G 17/052, F04B 49/08

(54) **NIVEAUREGELANLAGE FÜR EIN KRAFTFAHRZEUG**
LEVEL CONTROL SYSTEM FOR A MOTOR VEHICLE
SYSTEME DE CORRECTION D'ASSIETTE POUR UN VEHICULE AUTOMOBILE

(30) Priorität: 28.04.2005 DE 102005019783
(43) Veröffentlichungstag der Anmeldung: 16.01.2008
(73) Patentinhaber: Continental Teves AG & Co. OHG, 60488 Frankfurt (DE)
(72) Erfinder: REHRA, Günter, 30900 Wedemark (DE); NETTELMANN, Marc, 30826 Garbsen (DE)
(86) Internationale Anmeldenummer: PCT/EP2006/001529
(87) Internationale Veröffentlichungsnummer: WO 2006/114146

(56) Entgegenhaltungen:
- WO-A-2004/083801
- US-A- 2 782 637
- US-B1- 6 374 193
- PATENT ABSTRACTS OF JAPAN Bd. 011, Nr. 014 (M-553), 14. Januar 1987 (1987-01-14) & JP 61 190182 A (MITSUBISHI ELECTRIC CORP), 23. August 1986 (1986-08-23)

## Beschreibung

Die Erfindung betrifft eine Niveauregelanlage für ein Kraftfahrzeug gemäß dem Oberbegriff des Anspruchs 1.

Niveauregelanlagen sind aus dem Stand der Technik, z.B. aus der EP 0 978 397 B1 bekannt. Bei der dort beschriebenen Niveauregelanlage werden die Luftfedern ausschließlich aus der Atmosphäre befüllt bzw. in diese entleert werden (offene Niveauregelanlage). Aus der EP 1 243 447 A2 ist ebenfalls eine Niveauregelanlage bekannt, die zusätzlich zu den erwähnten Bestandteilen über einen Druckluftspeicher verfügt, aus dem die Luftfedern befüllt bzw. in den sie entleert werden (geschlossene Niveauregelanlage). Nach der Erstmontage einer Niveauregelanlage im Kraftfahrzeug werden die Luftfedern dieser mit Hilfe des Kompressors befüllt. Bei einer geschlossenen Niveauregelanlage geschieht dies z.B. dadurch, dass über einen externen Anschluss der Niveauregelanlage zunächst der Druckluftspeicher befüllt wird. Danach wird aus dem Druckluftspeicher mit Hilfe des Kompressors Druckluft in die einzelnen Luftfedern überführt. Bei diesem Vorgang wird vorausgesetzt, dass der Kompressor richtig angeschlossen ist und fehlerfrei arbeitet. Ein fehlerhafter Anschluss des Kompressors wird daher erst nach einem Zeitverzug erkannt, undzwar daran, dass sich die Luftfedern nicht wie gewünscht befüllen lassen. Der Zeitverzug kann bis zu einer Minute oder mehr betragen, was für die Feststellung eines Fehlers in einer modernen Fertigungsstraße eine lange Zeitdauer ist. Darüber hinaus ist festzustellen, dass erst an einem fortgeschrittenen Ort der Fertigungsstraße ein fehlerhafter Einbau des Kompressors festgestellt wird. Dies kann für die weitere Montage in der Fertigungsstraße nachteilig sein.

Später kann es bei Wartungs- oder Reparaturarbeiten an einer Niveauregelanlage zu einer Beschädigung des Kompressors kommen. Auch für diesen Fall gibt es keinen schnell durchführbaren Test zur Überprüfung der uneingeschränkten Funktionstüchtigkeit des Kompressors.

Aus der US 6,374,193 B1 ist eine Niveauregelanlage der eingangs genannten Art bekannt, die einen Druckluftspeicher enthält. Zur Überprüfung des Kompressors der Niveauregelanlage wird dort vorgeschlagen, mit Hilfe des Kompressors den Druckluftspeicher der Niveauregelanlage zu befüllen und währenddessen den Druck in dem Druckluftspeicher mit dem Drucksensor zu messen. Wenn der Druck in dem Druckluftspeicher in einem bestimmten Zeitraum um einen bestimmten Wert zunimmt, wird darauf geschlossen, dass die Funktionstüchtigkeit des Kompressors gegeben ist. Auch aus der JP 61190182 ist es bekannt, die Funktionstüchtigkeit eines Kompressors in einer Kompressoranlage während der Befüllung eines Druckluftspeichers zu überprüfen. Es ist festzustellen, dass die aus den genannten Druckschriften bekannten Überprüfungen der Funktionstüchtigkeit des Kompressors eine lange Zeitdauer beanspruchen, da dazu der Druckluftspeicher der Anlage durch den Kompressor mit Druckluft gefüllt werden muss.

Der Erfindung liegt die Aufgabe zugrunde, eine Niveauregelanlage zu schaffen, in der eine Überprüfung der einwandfreien Betriebsbereitschaft des Kompressors auf einfache Art und Weise in einer kurzen Zeitdauer durchführbar ist.

Die Aufgabe wird ausgehend von einer Niveauregelanlage gemäß dem Oberbegriff des Anspruchs durch die kennzeichnenden Merkmale des Anspruchs 1 gelöst.

Der Grundgedanke der Erfindung ist darin zu sehen, dass jede Druckluftleitung, die vom Ausgang des Kompressors ausgeht (mit Ausnahme der Sensordruckluftleitung), während der Überprüfung der Betriebsbereitschaft des Kompressors mit Hilfe eines schaltbaren Wegeventils gesperrt wird. Dies führt dazu, dass die vom Ausgang des Kompressors ausgehenden Druckluftleitungen nicht mit einem großen Luftvolumen, wie z.B. einer Luftfeder, der Atmosphäre oder einem Druckluftspeicher in Verbindung stehen und sich infolge dessen an dem Drucksensor schnell ein Druck aufbaut, wenn der Kompressor richtig arbeitet.

Ein Vorteil der Erfindung ist darin zu sehen, dass eine Überprüfung der Betriebsbereitschaft des Kompressors ohne zusätzliche Bestandteile in einer üblichen Niveauregelanlage durchführbar ist. Ein weiterer Vorteil ist darin zu sehen, dass die Überprüfung in einer sehr kurzen Zeitdauer durchführbar ist, da die Sensordruckluftleitung nur ein sehr kleines Luftvolumen aufweist und somit der Druck in ihr und damit am Drucksensor sehr schnell ansteigt, wenn der Kompressor ordnungsgemäß arbeitet. Ein weiterer Vorteil der Erfindung ist darin zu sehen, dass einer Beschädigung des Kompressors während der Überprüfung sicher vorgebeugt ist. Dies ist darauf zurückzuführen, dass der Kompressor nur kurzzeitig "gegen die geschlossenen Wegeventile" fördert und es somit nicht zu einer starken Erhitzung mit einhergehender Beschädigung des Kompressors kommt.

Die Weiterbildung der Erfindung nach Anspruch 2 beschreibt eine geschlossene Niveauregelanlage, die ein großes Luftvolumen in Form eines Druckluftspeichers hat. Der Vorteil der Weiterbildung ist darin zu sehen, dass während der Überprüfung der Betriebsbereitschaft des Kompressors die Druckluftleitung, die den Druckluftspeicher mit dem Ausgang des Kompressors verbindet, mit Hilfe eines schaltbaren Wegeventils gesperrt werden kann, so dass trotz des großen Luftvolumens des Druckluftspeichers die Überprüfung in einer kurzen Zeitdauer möglich ist.

Eine Weiterbildung der Erfindung nach Anspruch 3 ist dadurch gekennzeichnet, dass
- der Eingang des Kompressors über eine Atmosphärenleitung, in der ein zum Eingang des Kompressors hin öffnendes erstes Rückschlagventil angeordnet ist, direkt mit der Atmosphäre verbunden ist, und dass
- die Druckluftleitung, die den Druckluftspeicher mit dem Eingang des Kompressors verbindet, in einem Punkt zwischen dem ersten Rückschlagventil und dem Eingang des Kompressors auf der Atmosphärenleitung endet und dass
- zwischen dem Druckluftspeicher und dem genannten Punkt ein zweites Rückschlagventil in der Druckluftleitung liegt, das zum Eingang des Kompressors hin öffnet.

Der Vorteil dieser Weiterbildung ist darin zu sehen, dass über die Atmosphärenleitung mit Hilfe des Kompressors direkt Druckluft in die Luftfedern überführt werden kann, wenn der Druckluftspeicher noch nicht befüllt ist und nur einen niedrigen Luftdruck aufweist.

Gemäß einer Weiterbildung der Erfindung nach Anspruch 4 zweigt von der Sensordruckluftleitung jeweils eine Druckluftleitung für jede Luftfeder ab, die mit einem schaltbaren Wegeventil sperrbar ist. Die Sensordruckluftleitung wird also als "Stammleitung" verwendet, von der die Druckluftleitungen zu den Luftfedern abzweigen. Der Vorteil dieser Weiterbildung ist darin zu sehen, dass die Länge der Druckluftleitungen in der Niveauregelanlage und damit die Zeitdauer für die Überprüfung der Betriebsbereitschaft des Kompressors optimiert ist.

Gemäß einer Weiterbildung der Erfindung nach Anspruch 5 findet eine Überprüfung der Betriebsbereitschaft des Kompressors während der Erstmontage der Niveauregelanlage statt. Die Überprüfung wird zu einem möglichst frühen Zeitpunkt durchgeführt. Der Vorteil dieser Weiterbildung ist darin zu sehen, dass schon vor der ersten Befüllung der Luftfedern mit dem Kompressor dessen ordnungsgemäße Betriebsbereitschaft feststeht.

Gemäß einer Weiterbildung der Erfindung nach Anspruch 6 findet eine Überprüfung der Betriebsbereitschaft des Kompressors nach jeder Reparatur oder Wartung der Niveauregelanlage statt. Der Vorteil der Weiterbildung ist darin zu sehen, dass eine Beschädigung des Kompressors während einer Reparatur oder einer Wartung sofort festgestellt und behoben werden kann.

Gemäß einer Weiterbildung der Erfindung nach Anspruch 7 findet eine Überprüfung der Betriebsbereitschaft des Kompressors statt, sobald erkannt wird, dass das Kraftfahrzeug, in dem sich die Niveauregelanlage befindet, im Gelände fährt. Eine Geländefahrt des Kraftfahrzeuges kann z.B. am Neigungswinkel der Karosserie oder an der Getriebestellung (bei einer Geländefahrt wird entweder eine niedrige Übersetzung oder sogar eine Untersetzung eingestellt) erkannt werden. Der Vorteil dieser Weiterbildung wird verständlich, wenn man bedenkt, dass vor oder während einer Geländefahrt unter Einsatz des Kompressors der Fahrzeugaufbau meistens stark angehoben wird und der Kompressor deshalb besonders belastet wird. Der Vorteil der Weiterbildung ist also darin zu sehen, dass eine Betriebsbereitschaft des Kompressors frühzeitig überprüft wird, so dass bei einer einer eingeschränkten Funktion oder bei einem Funktionsausfall des Kompressors eine Geländefahrt noch rechtzeitig unterbunden werden kann.

Gemäß einer Weiterbildung der Erfindung nach Anspruch 8 findet eine Überprüfung der Betriebsbereitschaft des Kompressors in regelmäßigen Betriebsabständen des Fahrzeuges (z.B. alle 5 bis 10 Betriebsstunden) statt. Der Vorteil dieser Weiterbildung ist darin zu sehen, dass eine Überprüfung des Kompressors regelmäßig stattfindet und deshalb die Wahrscheinlichkeit, dass der Fahrer des Kraftfahrzeuges von einem funktionsgestörten Kompressor "überrascht" wird, gering ist:

Gemäß einer Weiterbildung nach Anspruch 9 ist die Dauer der Kompressoreinschaltzeit während der Überprüfung der Betriebsbereitschaft auf 0,5 bis 4 Sekunden, vorzugsweise auf 0,5 bis 2 Sekunden, begrenzt. Es hat sich gezeigt, dass eine derartig kurze Kompressoreinschaltzeit zur Durchführung der Überprüfung ausreichend ist. Dies ist darauf zurückzuführen, dass die Luftvolumina, in die der Kompressor während der Überprüfung fördert, sehr klein sind, so dass es bei einem betriebsbereiten Kompressor schnell zu einem Druckanstieg am Drucksensor kommt. Der Vorteil der Weiterbildung ist darin zu sehen, dass aufgrund der geringen Kompressoreinschaltzeit einer übermäßigen Erhitzung und daraus resultierenden Beschädigung des Kompressors sicher vorgebeugt ist.

Gemäß einer Weiterbildung der Erfindung nach Anspruch 10 wird von dem Steuergerät der Niveauregelanlage eine Fehlermeldung abgegeben, wenn die Überprüfung ergibt, dass die Betriebsbereitschaft des Kompressors nicht gegeben ist. Der Vorteil dieser Weiterbildung ist darin zu sehen, dass die fehlende Betriebsbereitschaft des Kompressors angezeigt wird und unverzüglich behoben werden kann.

Gemäß einer Weiterbildung der Erfindung nach Anspruch 11 wird die Niveauregelanlage in ein Notlaufprogramm geschaltet, wenn die Überprüfung ergibt, dass die Betriebsbereitschaft des Kompressors nicht gegeben ist. Das Notlaufprogramm wird vorzugsweise so gewählt, dass zunächst ein Normalniveau des Kraftfahrzeuges eingestellt wird und danach keine Regelung in der Niveauregelanlage mehr stattfindet. Sollte ein Anheben des Kraftfahrzeuges aufgrund eines nicht mehr funktionierenden Kompressors unmöglich sein, so kann das Notlaufprogramm vorsehen, dass das Kraftfahrzeug zumindest nicht weiter abgesenkt wird, wenn es sich bereits unterhalb des Normalniveaus befindet. Der Vorteil der Weiterbildung ist darin zu sehen, dass sich das Niveau des Kraftfahrzeuges auch bei eingeschränkter bzw. fehlender Betriebsbereitschaft des Kompressors immer möglichst nahe an dem Normalniveau befindet.

Ein Ausführungsbeispiel und weitere Vorteile der Erfindung werden im Zusammenhang mit den nachstehenden Figuren erläutert, darin zeigt:
- Fig. 1: eine offene Niveauregelanlage,
- Fig. 2: eine geschlossene Niveauregelanlage,
- Fig. 3: ein Flussdiagramm.

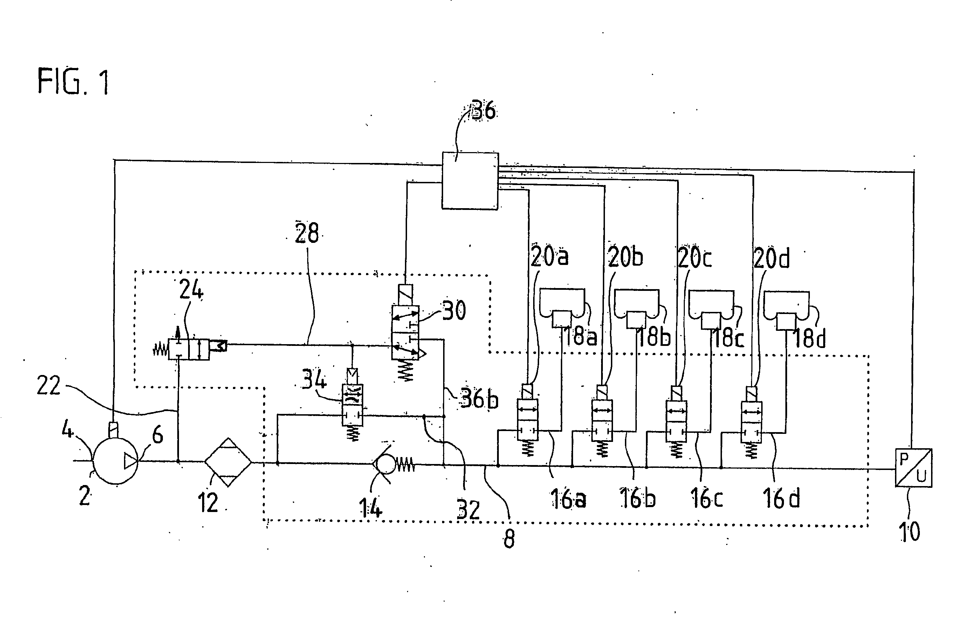

Fig. 1 zeigt eine offene Niveauregelanlage mit einem Kompressor 2, der einen Eingang 4 und einen Ausgang 6 aufweist. Am Ausgang 6 beginnt die Sensordruckluftleitung 8, die an einem Druckluftsensor 10 endet. In der Sensordruckluftleitung 8 liegt ein Lufttrockner 12 und ein Rückschlagventil 14, dass zum Drucksensor 10 hin öffnet. Die Sensordruckluftleitung 8 ist als Stammleitung ausgebildet, von der Druckluftleitungen 16a bis 16d abzweigen, die in Luftfedern 18a bis 18d enden. In den Druckluftleitungen 16a bis 16d liegen schaltbare Wegeventile 20a bis 20d, die in ihrem ersten Schaltzustand die jeweilige Druckluftleitung 16a bis 16d sperren und in ihrem zweiten Schaltzustand die jeweilige Druckluftleitung 16a bis 16d durchschalten.

Zwischen dem Ausgang 6 des Kompressors 2 und dem Lufttrockner 12 zweigt von der Sensordruckluftleitung 8 eine Ablassleitung 22 ab, die in einem schaltbaren Wegeventil 24 endet. Das schaltbare Wegeventil 24 sperrt in einem ersten Schaltzustand die Ablassleitung und verbindet diese in einem zweiten Schaltzustand mit der Atmosphäre. Das schaltbare Wegeventil 24 ist als pneumatisches Wegeventil ausgebildet und der pneumatische Steuereingang 26 wird über die Druckluftleitung 28 angesteuert, in der ein schaltbares Wegeventil 30 liegt. Das Rückschlagventil 14 wird von einer Druckluftleitung 32 überbrückt, in der ebenfalls ein pneumatisch schaltbares Wegeventil 34 liegt. Die elektrisch schaltbaren Wegeventile 20a bis 20d und 30 werden von der Steuereinheit 36 der Niveauregelanlage gesteuert. Ferner wird von der Steuereinheit 36 der Kompressor 2 gesteuert.

Mit Hilfe der in der Fig. 1 gezeigten Niveauregelanlage kann jede einzelne Luftfeder 18a bis 18d zum Anheben des Niveaus mit Druckluft befüllt bzw. zum Absenken des Niveaus in die Atmosphäre entleert werden. Wie dies im einzelnen erfolgt wird ausführlich in der EP 0 978 397 B 1 beschrieben, so dass hier nicht näher darauf eingegangen werden soll.

Darüber hinaus kann mit Hilfe der Niveauregelanlage die Betriebsbereitschaft des Kompressors 2 wie folgt überprüft werden: Zunächst werden sämtliche Druclduftleitungen, die vom Ausgang 6 des Kompressors 2 ausgehen, gesperrt (mit Ausnahme der Sensordruckluftleitung 8). Insbesondere werden die Druckluftleitungen 16a bis 16d zu den Luftfedern 18a bis 18d mit Hilfe der schaltbaren Wegeventile 20a bis 20d (die dann den in der Figur 1 gezeigten Schaltzustand einnehmen), gesperrt. Ferner wird die Druckluftleitung 28, die von der Sensordruckluftleitung 8 abzweigt, mit Hilfe des schaltbaren Wegeventils 30 gesperrt, das dann den in der Fig. 1 gezeigten Schaltzustand einnimmt. In Folge der Sperrung der Druckluftleitung 28 ist auch die Ablassleitung 22 gesperrt, da das pneumatisch schaltbare Wegeventil 24 nicht ansteuerbar ist. Die schaltbaren Wegeventile 20a bis 20d und 30 werden von der Steuereinheit 36 in die gezeigten Schaltzustände überführt.

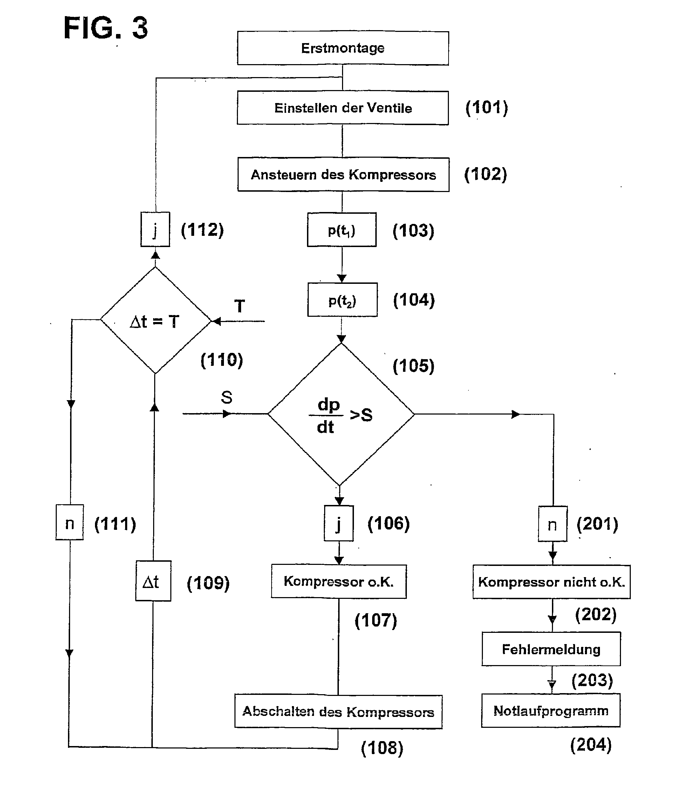

Nach Sperrung der Druckluftleitungen 16a bis 16d, 28 und 22 wird von der Steuereinheit 36 der Kompressor 2 angesteuert, so dass dieser (vorausgesetzt, er ist ordnungsgemäß angeschlossen) zu laufen beginnt. In der Sensordruckluftleitung 8, die den Ausgang 6 des Kompressors mit dem Drucksensor 10 verbindet, baut sich aufgrund ihres geringen Luftvolumens schnell ein Druck auf. Der Druck wird von dem Drucksensor 10 ständig gemessen und an die Steuereinheit 36 weitergegeben. In der Steuereinheit 36 wird geprüft, wie schnell sich der Druck an dem Drucksensor 10 aufbaut. Die Steuereinheit 36 beurteilt die Betriebsbereitschaft des Kompressors 2 als gegeben, wenn der Druckaufbau/Zeitdauer einen in der Steuereinheit 36 gespeicherten Schwellwert überschreitet (Näheres siehe Fig. 3).

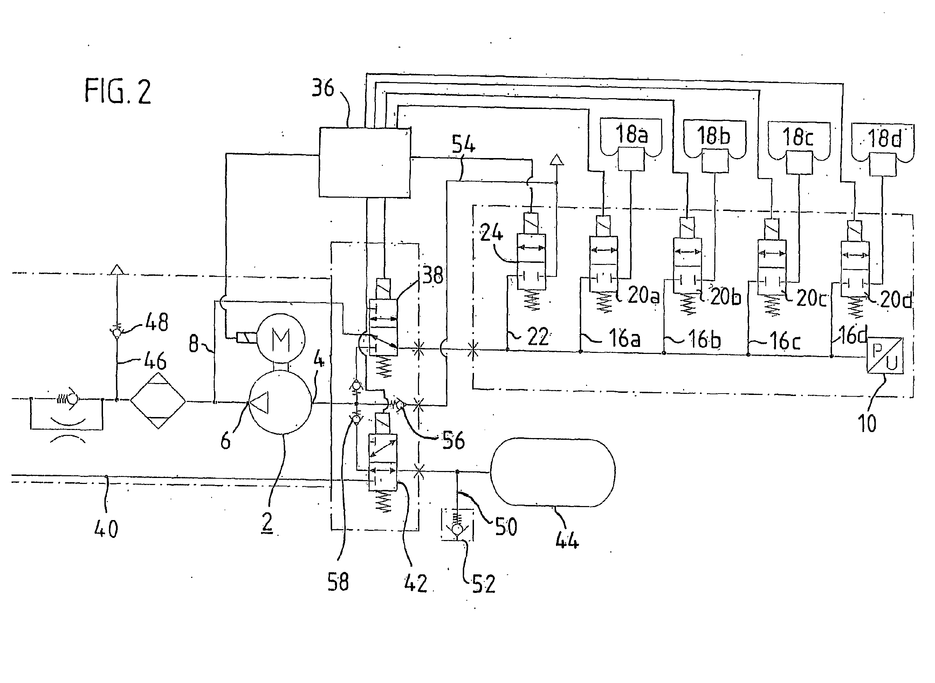

Fig. 2 zeigt eine geschlossene Niveauregelanlage, deren Aufbau an sich aus dem Stand der Technik bekannt ist und ausführlich in der EP 1 243 447 A2 beschrieben wird. Daher soll an dieser Stelle auf den Aufbau der Niveauregelanlage nur insoweit eingegangen werden, als dies für die folgenden Erläuterungen notwendig ist. Die Niveauregelanlage enthält einen Kompressor 2 mit einem Eingang 4 und einem Ausgang 6. An den Ausgang 6 des Kompressors 2 sind mehrere Druckluftleitungen angeschlossen. So geht von dem Ausgang 6 die Sensordruckluftleitung 8 aus, die in dem Drucksensor 10 endet. Die Sensordruckluftleitung 8 ist genau wie bei der in der Fig.1 gezeigten Niveauregelanlage ebenfalls als Stammleitung ausgebildet, von der Druckluftleitungen 16a bis 16d zu Luftfedern 18a bis 18d abzweigen, in denen schaltbare Wegeventile 20a bis 20d liegen.

Ferner zweigt von der Sensordruckluftleitung 8 die Ablassleitung 22 ab, in der ein schaltbares Wegeventil 24 liegt. Neben der Sensordruckluftleitung 8, den Druckluftleitungen 16a bis 16d und der Ablassleitung 22 zweigt von dem Ausgang 6 des Kompressors 2 die Druckluftleitung 40 ab, die über ein schaltbares Wegeventil 42 mit dem Druckluftspeicher 44 der geschlossenen Niveauregelanlage verbindbar ist. Von der Druckluftleitung 40 zweigt eine weitere Druckluftleitung 46 ab, in der ein Überdruckventil 48 in Form eines Rückschlagventils liegt. Über die Druckluftleitung 46 kann der Kompressor 2 bei einem extremen Überdruck in der Niveauregelanlage direkt in die Atmosphäre fördern, so dass er nicht beschädigt wird.

Von der Druckluftleitung 40 zweigt zwischen dem schaltbaren Wegeventil 42 und dem Druckluftspeicher 44 zusätzlich eine Druckluftleitung 50 ab, in der ein Rückschlagventil 52 liegt, das zur Druckluftleitung 40 hin öffnet. An die Druckluftleitung 50 ist eine externe Druckluftquelle anschließbar, über die eine Erstbefüllung des Druckluftspeichers 44 erfolgen kann, um den Kompressor 2 zu schonen. Ferner ist der Eingang 4 des Kompressors 2 über eine Druckluftleitung 54 direkt mit der Atmosphäre verbunden. In der Druckluftleitung 54 liegt ein Rückschlagventil 56, das in Richtung des Eingangs 4 des Kompressors öffnet. Über die Druckluftleitung 54 kann mit Hilfe des Kompressors 2 eine Befüllung der Luftfedern 18a bis 18d erfolgen, wenn in dem Druckluftspeicher 44 keine oder zu wenig Druckluft vorhanden ist. In diesem Fall öffnet sich das Rückschlagventil 56 und das Rückschlagventil 58 wird automatisch gesperrt, so dass der Kompressor 2 Druckluft direkt aus der Atmosphäre ansaugt.

Mit Hilfe der in der Fig. 2 gezeigten Niveauregelanlage erfolgt eine Überprüfung der Betriebsbereitschaft des Kompressors wie folgt:
Zunächst wird der Ausgang 6 des Kompressors 2 über die Sensordruckluftleitung 8 mit dem Drucksensor 10 verbunden, d.h. dass das schaltbare Wegeventil 38 den in der Fig. 2 gezeigten Schaltzustand einnimmt. Danach werden alle anderen Druckluftleitungen, die mit dem Ausgang 6 des Kompressors 2 verbunden sind, nämlich die Druckluftleitungen 22, 16a bis 16d, 40 und 46 gesperrt. Dies erfolgt dadurch, dass die entsprechenden schaltbaren Wegeventile 24, 20a bis 20d und 42 den in der Fig. 2 gezeigte Schaltzustand einnehmen bzw. von der Steuereinheit 36 der Niveauregelanlage in diesen überführt werden. Die Druckluftleitung 46 wird durch das Rückschlagventil 48 automatisch gesperrt, da dieses nur dann öffnet, wenn von dem Kompressor 2 ein extremer Druck aufgebaut wird. Es ist jedoch ebenfalls möglich, auch die Druckluftleitung 46 während der Überprüfung der Betriebsbereitschaft des Kompressors mit einem (nicht gezeigten) schaltbarem Wegeventil separat zu sperren.

Nach Sperrung der Druckluftleitungen, die vom Ausgang6 des Kompressors ausgehen, wird von der Steuereinheit 36 der Kompressor angesteuert, so dass dieser zu laufen beginnt, wenn seine Betriebsbereitschaft gegeben ist. Der Kompressor fördert dann aus dem Druckluftspeicher 44 (wenn dieser schon befüllt ist) oder über die Druckluftleitung 54 aus der Atmosphäre (wenn der Druckluftspeicher noch nicht oder zu gering befüllt ist) über seinen Eingang 4 und seinen Ausgang 6 Druckluft in die Sensordruckluftleitung 8. Aufgrund des geringen Luftvolumens der Sensordruckluftleitung 8 baut sich in dieser und dementsprechend an dem Drucksensor 10 schnell ein Druck auf. Der Druck wird von dem Drucksensor 10 kontinuierlich gemessen und an die Steuereinheit 36 weitergegeben. Die Steuereinheit 36 erachtet die Betriebsbereitschaft des Kompressors 2 als gegeben, wenn der Druckanstieg/Zeitdauer einen in der Steuereinheit 36 gespeicherten Schwellwert überschreitet (Näheres siehe Fig. 3).

Fig. 3 zeigt ein Flussdiagramm, mit dessen Hilfe die Überprüfung der Betriebsbereitschaft des Kompressors 2, siehe Figuren 1 und 2, näher erläutert wird. Bei der ersten Montage kann mit Hilfe eines externen Steuergerätes ein Signal auf die Steuereinheit 36 gegeben werden, die darauf hin die Routine zur Überprüfung der Betriebsbereitschaft des Kompressors wie folgt durchführt:
- Verbinden der Sensordruckluftleitung mit dem Drucksensor der Niveauregelanlage und Einstellen der schaltbaren Wegeventile der Niveauregelanlage derart, dass alle übriegen Druckluftleitungen, die mit dem Ausgang des Kompressors verbunden sind, gesperrt werden (101);
- Ansteuern des Kompressors, so dass dieser zu laufen beginnt, wenn er ordnungsgemäß angeschlossen ist (102);
- Kontinuierliches Registrieren der Drucke, die sich an dem Drucksensor aufbauen (103; 104);
- Errechnen des Wertes dp/dt = p (t1) - p (t2) / t1 - t2; wobei p (ti), i = 1, 2 einen vom Drucksensor gemessenen Druck zum Zeitpunkt ti bezeichnen
- Überprüfung, ob dp/dt > S, wobei S in der Steuereinheit gespeichert ist (105);
- Falls die Bedingung in Verfahrensschritt 105 erfüllt ist, erachtet die Steuereinheit den Kompressor der Niveaurregelanlage als betriebsbereit (106/107);
- Die Steuereinheit steuert nach den Verfahrensschritten 106, 107 den Kompressor der Niveauregelanlage nicht mehr an, so dass dieser sich abschaltet (108);

Die Zeitdauer zwischen den Verfahrensschritten 102 und 108, die der Kompressorlaufzeit entspricht und während der die Überprüfung der Betriebsbereitschaft des Kompressors stattfindet, beträgt 0,5 bis 4 Sekunden, vorzugsweise 0,5 bis 2 Sekunden.

Falls in dem Verfahrensschritt 105 in der Steuereinheit erkannt wird, dass dp/dt ≤ S ist, geschieht Folgendes:
- die Steuereinheit erkennt, dass der Schwellenwert S nicht überschritten wird und erachtet die Betriebsbereitschaft des Kompressors nicht als gegeben (201, 202);
- die Steuereinheit gibt eine Fehlermeldung ab und führt in Zukunft in der Niveauregelanlage solange ausschließlich ein Notlaufprogramm durch, bis die Betriebsbereitschaft des Kompressors wieder gegeben ist (203;204)

Nach der Überprüfung der Betriebsbereitschaft des Kompressors durch die Steuereinheit können die Verfahrensschritte 101 bis 108 von der Steuereinheit nach jeder Reparatur oder Wartung der Niveauregelanlage durchgeführt werden. Auch in diesem Fall wird die Routine zur Überprüfung durch ein externes Steuergerät, das ein Signal an die Steuereinheit 36 übermittelt, ausgelöst. Es ist ebenfalls möglich, die Routine zur Überprüfung der Betriebsbereitschaft des Kompressors nach den Verfahrensschritten 101 bis 108 in der Steuereinheit der Niveauregelanlage immer dann durchzuführen, wenn das Kraftfahrzeug mit der Niveauregelanlage ins Gelände fährt. In diesem Fall wird die Routine dadurch ausgelöst, dass an die Steuereinheit 36 der Niveauregelanlage bestimmte Signale übermittelt werden, die eine Geländefahrt des Kraftfahrzeuges anzeigen (z.B. ein Signal, das eine getriebeuntersetzung anzeigt).

Es ist ebenfalls möglich, die Routine zur Überprüfung der Betriebsbereitschaft des Kompressors nach den Verfahrensschritten 101 bis 108 in regelmäßigen Betriebsabständen des Kraftfahrzeuges zu wiederholen. Dies geschieht wie folgt:
- Nach Abschluss der Überprüfung (108) wird in der Steuereinheit die Zeit Δt überprüft, die seit der letzten Überprüfung vergangen ist (109)
- Die Zeit Δt wird mit einer Zeit T, die in der Steuereinheit gespeichert ist, verglichen (110)
- Der Vergleich dauert so lange an, bis Δt = T ist (Schleife 110, 111, 109)
- Wenn der Zeitraum T vergangen ist, wird die Routine zur Überprüfung der Betriebsbereitschaft des Kompressors erneut ausgelöst (101)

### Bezugszeichenliste

### (Teil der Beschreibung)

- 2: Kompressor
- 4: Eingang
- 6: Ausgang
- 8: Sensordruckluftleitung
- 10: Druckmesser
- 12: Lufttrockner
- 14: Rückschlagventil
- 16a-16d: Druckluftleitung
- 18a-18d: Luftfedern
- 20a-20d: schaltbares Wegeventil
- 22: Ablassleitung
- 24: schaltbares Wegeventil
- 26: pneumatischer Steuereingang
- 28: Druckluftleitung
- 30: schaltbares Wegeventil
- 32: Druckluftleitung
- 34: schaltbares Wegeventil
- 36: Steuereinheit
- 38: schaltbares Wegeventil
- 40: Druckluftleitung
- 42: schaltbares Wegeventil
- 44: Druckluftsensor
- 46: Druckluftleitung
- 48: Rückschlagventil
- 50: Druckluftleitung
- 52: Rückschlagventil
- 54: Atmosphärenleitung
- 56,58: Rückschlagventil

## Patentansprüche

1. Niveauregelanlage für ein Kraftfahrzeug, durch die ein Kraftfahrzeugaufbau gegenüber mindestens einer Kraftfahrzeugachse abgefedert ist, die folgende Bestandteile enthält:
- einen Kompressor (2) mit einem Eingang (4) und einem Ausgang (6),
- Luftfedern (18a - 18d), von denen jede über eine Druckleitung (16a -16d), die mit einem schaltbaren Wegeventil (20a - 20d) sperrbar ist, mit dem Ausgang (6) des Kompressors (2) verbunden ist,
- mindestens einen Drucksensor (10), der über eine Sensordruckluftleitung (8) mit dem Ausgang (6) des Kompressor (2) zumindest zeitweise verbunden ist,
- wobei während einer Überprüfung der Betriebsbereitschaft des Kompressors (2) der Drucksensor (10) über die Sensordruckluftleitung (8) mit dem Ausgang (6) des Kompressors (2) verbunden wird,
**dadurch gekennzeichnet, dass** eine Überprüfung der Betriebsbereitschaft des Kompressors wie folgt vorgenommen wird:
- jede Druckluftleitung (16a - 16d), die vom Ausgang des Kompressors (2) ausgeht, mit Ausnahme der Sensordruckluftleitung (8), wird mittels eine schaltbaren Wegeventils (20a - 20d) gesperrt,
- der Kompressor (2) wird eingeschaltet,
- der Druckanstieg an dem Drucksensor (10) wird gemessen,
- es wird überprüft, ob der Druckanstieg pro Zeitraum einen vorgegebenen Schwellwert S überschreitet, wobei die Betriebsbereitschaft des Kompressors (2) gegeben ist, wenn dies der Fall ist,
- nach Überprüfung der Betriebsbereitschaft wird der Kompressor (2) ausgeschaltet.

2. Niveauregelanlage für ein Kraftfahrzeug nach Anspruch 1, **dadurch gekennzeichnet, dass**
- die Niveauregelanlage einen Druckluftspeicher (44) enthält, der über eine Druckluftleitung mit dem Eingang (4) des Kompressors (2) und über eine weitere Druckluftleitung (40) mit dem Ausgang (6) des Kompressors (2) verbunden ist, wobei eine der Druckluftleitungen jeweils mit einem schaltbaren Wegeventil (42) sperrbar ist und die andere Druckluftleitung dann mit einem schaltbaren Wegeventil (42) durchgeschaltet ist, und dass
- die Druckluftleitung (40), die den Druckluftspeicher (44) mit dem Ausgang (6) des Kompressors (2) verbindet, während einer Überprüfung der Betriebsbereitschaft des Kompressors (2) gesperrt wird.

3. Niveauregelanlage für ein Kraftfahrzeug nach Anspruch 2, **dadurch gekennzeichnet, dass**
- der Eingang (4) des Kompressors (2) über eine Atmosphärenleitung (54), in der ein zum Eingang (4) des Kompressors (2) hin öffnendes erstes Rückschlagventil (56) angeordnet ist, direkt mit der Atmosphäre verbunden ist und dass
- die Druckluftleitung, die den Druckluftspeicher (44) mit dem Eingang (4)des Kompressors (2) verbindet, in einem Punkt zwischen dem ersten Rückschlagventil (56) und dem Eingang (4) des Kompressors (2) auf der Atmosphärenleitung (54) endet, und dass
- zwischen dem Druckluftspeicher (44) und dem genannten Punkt ein zweites Rückschlagventil (58) in der Druckluftleitung liegt, das zum Eingang (4) des Kompressors (2) hin öffnet.

4. Niveauregelanlage für ein Kraftfahrzeug nach einem der Ansprüche 1 bis 3, **dadurch gekennzeichnet, dass** von der Sensordruckluftleitung (8) für jede Luftfeder (18a - 18d) jeweils eine Druckluftleitung (16a - 16d) abzweigt, die mit einem schaltbaren Wegeventil (20a - 20d) sperrbar ist.

5. Niveauregelanlage für ein Kraftfahrzeug nach einem der Ansprüche 1 bis 4, **dadurch gekennzeichnet, dass** eine Überprüfung der Betriebsbereitschaft des Kompressors (2) während Erstmontage der Niveauregelanlage stattfindet.

6. Niveauregelanlage für ein Kraftfahrzeug nach einem der Ansprüche 1 bis 5, **dadurch gekennzeichnet, dass** eine Überprüfung der Betriebsbereitschaft des Kompressors (2) nach jeder Reparatur oder Wartung der Niveauregelanlage stattfindet.

7. Niveauregelanlage für ein Kraftfahrzeug nach einem der Ansprüche 1 bis 6, **dadurch gekennzeichnet, dass** eine Überprüfung der Betriebsbereitschaft des Kompressors (2) stattfindet, sobald erkannt wird, dass das Kraftfahrzeug, in dem sich die Niveauregelanlage befindet, im Gelände fährt.

8. Niveauregelanlage für ein Kraftfahrzeug nach einem der Ansprüche 1 bis 7, **dadurch gekennzeichnet, dass** eine Überprüfung der Betriebsbereitschaft des Kompressors (2) in regelmäßigen Betriebsabständen des Kraftfahrzeugs, in dem sich die Niveauregelanlage befindet, stattfindet.

9. Niveauregelanlage für ein Kraftfahrzeug nach einem der Ansprüche 1 bis 8, **dadurch gekennzeichnet, dass** die Dauer der Kompressoreinschaltzeit während der Überprüfung der Betriebsbereitschaft des Kompressors (2) auf 0,5 bis 4 Sekunden, vorzugsweise auf 0,5 bis 2 Sekunden, begrenzt ist.

10. Niveauregelanlage für ein Kraftfahrzeug nach einem der Ansprüche 1 bis 9, **dadurch gekennzeichnet, dass** von dem Steuergerät der Niveauregelanlage eine Fehlermeldung abgegeben wird, wenn die Überprüfung ergibt, dass die Betriebsbereitschaft des Kompressors (2) nicht gegeben ist.

11. Niveauregelanlage für ein Kraftfahrzeug nach einem der Ansprüche 1 bis 10, **dadurch gekennzeichnet, dass** die Niveauregelanlage in ein Notlaufprogramm geschaltet wird, wenn die Überprüfung ergibt, dass die Betriebsbereitschaft des Kompressors (2) nicht gegeben ist.

## Claims

1. Level control system for a motor vehicle, by means of which a vehicle body is spring-suspended relative to at least one vehicle axle and which comprises the following components:
- a compressor (2) with an inlet (4) and an outlet (6),
- air springs (18a - 18d), each of which is connected to the outlet (6) of the compressor (2) via a compressed air line (16a - 16d), which may be shut off by a switchable directional control valve (20a - 20d),
- at least one pressure sensor (10), which is connected at least from time to time to the outlet (6) of the compressor (2) via a sensor compressed air line (8),
- the pressure sensor (10) being connected, during checking of the readiness for service of the compressor (2), to the outlet (6) of the compressor (2) via the sensor compressed air line (8),
**characterized in that** checking of the readiness for service of the compressor is performed as follows:
- each compressed air line (16a - 16d) which exits from the outlet of the compressor (2), with the exception of the sensor compressed air line (8), is shut off by means of a switchable directional control valve (20a - 20d),
- the compressor (2) is switched on,
- the pressure increase at the pressure sensor (10) is measured,
- checking is performed as to whether the pressure increase per unit time exceeds a predetermined threshold value S, the compressor (2) being ready for service if this is the case,
- after checking for readiness for service the compressor (2) is switched off.

2. Level control system for a motor vehicle according to Claim 1, **characterized in that**
- the level control system comprises a compressed air accumulator (44), which is connected via one compressed air line to the inlet (4) of the compressor (2) and via a further compressed air line (40) to the outlet (6) of the compressor (2), it being possible in each case to shut off one of the compressed air lines using a switchable directional control valve (42) and the other compressed air line then being switched through using a switchable directional control valve (42), and **in that**
- the compressed air line (40), which connects the compressed air accumulator (44) to the outlet (6) of the compressor (2), is shut off during checking of the readiness for service of the compressor (2).

3. Level control system for a motor vehicle according to Claim 2, **characterized in that**
- the inlet (4) of the compressor (2) is connected directly to the atmosphere via an atmospheric line (54), in which a first nonreturn valve (56) opening towards the inlet (4) of the compressor (2) is arranged, and **in that**
- the compressed air line connecting the compressed air accumulator (44) to the inlet (4) of the compressor (2) ends at a point on the atmospheric line (54) between the first nonreturn valve (56) and the inlet (4) of the compressor (2), and **in that**
- a second nonreturn valve (58) opening towards the inlet (4) of the compressor (2) is located in the compressed air line between the compressed air accumulator (44) and the stated point.

4. Level control system for a motor vehicle according to one of Claims 1 to 3, **characterized in that** in each case a compressed air line (16a - 16d) branches off from the sensor compressed air line (8) for each air spring (18a - 18d), it being possible to shut off the former compressed air line with a switchable directional control valve (20a - 20d).

5. Level control system for a motor vehicle according to one of Claims 1 to 4, **characterized in that** checking of the readiness for service of the compressor (2) takes place during initial fitting of the level control system.

6. Level control system for a motor vehicle according to one of Claims 1 to 5, **characterized in that** checking of the readiness for service of the compressor (2) takes place after each repair or servicing of the level control system.

7. Level control system for a motor vehicle according to one of Claims 1 to 6, **characterized in that** checking of the readiness for service of the compressor (2) takes place as soon as it is identified that the motor vehicle in which the level control system is situated has started cross-country driving.

8. Level control system for a motor vehicle according to one of Claims 1 to 7, **characterized in that** checking of the readiness for service of the compressor (2) takes place at regular operating intervals of the motor vehicle in which the level control system is situated.

9. Level control system for a motor vehicle according to one of Claims 1 to 8, **characterized in that** the duration of the compressor on-time during readiness for service checking of the compressor (2) is limited to 0.5 to 4 seconds, preferably to 0.5 to 2 seconds.

10. Level control system for a motor vehicle according to one of Claims 1 to 9, **characterized in that** the control device of the level control system outputs a fault signal if the check finds that the compressor (2) is not ready for service.

11. Level control system for a motor vehicle according to one of Claims 1 to 10, **characterized in that** the level control system is switched to an emergency operation program if the check finds that the compressor (2) is not ready for service.

## Revendications

1. Installation de régulation du niveau d'un véhicule automobile par laquelle le châssis du véhicule automobile est suspendu par rapport à au moins un essieu du véhicule automobile, l'installation contenant les composants suivants :
un compresseur (2) doté d'une entrée (4) et d'une sortie (6),
des amortisseurs pneumatiques (18a - 18d) dont chacun est relié à la sortie (6) du compresseur (2) par un conduit sous pression (16a - 16d) apte à être bloqué par une soupape commutable de passage (20a - 20d),
au moins un détecteur de pression (10) qui est relié au moins une partie du temps à la sortie (6) du compresseur (2) par un conduit (8) d'air sous pression de détecteur,
le détecteur de pression (10) étant relié à la sortie (6) du compresseur (2) par le conduit (8) d'air sous pression de détecteur pendant une vérification du bon fonctionnement du compresseur (2),
**caractérisée en ce que**
la vérification du bon fonctionnement du compresseur est réalisée de la façon suivante :
à l'exception du conduit (8) d'air sous pression de détecteur, chaque conduit d'air sous pression (16a - 16d) qui part de la sortie du compresseur (2) est bloqué au moyen d'une soupape commutable de passage (20a - 20d),
le compresseur (2) est branché,
l'augmentation de pression est mesurée sur le détecteur de pression (10),
on vérifie si l'augmentation de pression par unité de temps dépasse une valeur de seuil prédéterminée S, le bon fonctionnement du compresseur (2) étant confirmé lorsque c'est le cas,
le compresseur (2) étant débranché après vérification de son bon fonctionnement.

2. Installation de régulation du niveau d'un véhicule automobile selon la revendication 1,
**caractérisée en ce que**
l'installation de régulation de niveau contient un réservoir (44) d'air sous pression qui est relié par un conduit d'air sous pression à l'entrée (4) du compresseur (2) et par un autre conduit d'air sous pression (40) à la sortie (6) du compresseur (2),
**en ce que** l'un des conduits d'air sous pression peut être bloqué par une soupape commutable de passage (42) respective, l'autre conduit d'air sous pression étant alors ouvert par une soupape commutable de passage (42) et
**en ce que** le conduit d'air sous pression (40) qui relie le réservoir (44) d'air sous pression à la sortie (6) du compresseur (2) est bloqué pendant une vérification du bon fonctionnement du compresseur (2).

3. Installation de régulation du niveau d'un véhicule automobile selon la revendication 2,
**caractérisée en ce que**
l'entrée (4) du compresseur (2) est reliée directement à l'atmosphère par un conduit atmosphérique (54) dans lequel est disposé un premier clapet anti-retour (56) qui s'ouvre en direction de l'entrée (4) du compresseur (2),
**en ce que** le conduit d'air sous pression qui relie le réservoir (44) d'air sous pression à l'entrée (4) du compresseur (2) se termine en un point situé sur le conduit atmosphérique (54) entre la première soupape anti-retour (56) et l'entrée (4) du compresseur (2) et
**en ce qu'**une deuxième soupape anti-retour (58) qui s'ouvre en direction de l'entrée (4) de compresseur (2) est disposée dans le conduit d'air sous pression entre le réservoir (44) d'air sous pression et ledit point.

4. Installation de régulation du niveau d'un véhicule automobile selon l'une des revendications 1 à 3, **caractérisée en ce que** le conduit (8) d'air sous pression de détecteur se ramifie en conduits d'air sous pression (16a - 16d) respectifs prévus pour chaque amortisseur pneumatique (18a - 18d), qui peuvent être bloqués par une soupape commutable de passage (20a - 20d).

5. Installation de régulation du niveau d'un véhicule automobile selon l'une des revendications 1 à 4, **caractérisée en ce qu'**une vérification du bon fonctionnement du compresseur (2) a lieu pendant le premier montage de l'installation de régulation de niveau.

6. Installation de régulation du niveau d'un véhicule automobile selon l'une des revendications 1 à 5, **caractérisée en ce qu'**une vérification du bon fonctionnement du compresseur (2) a lieu après chaque réparation ou entretien de l'installation de régulation de niveau.

7. Installation de régulation du niveau d'un véhicule automobile selon l'une des revendications 1 à 6, **caractérisée en ce qu'**une vérification du bon fonctionnement du compresseur (2) a lieu dès que l'on détecte que le véhicule automobile dans lequel est située l'installation de régulation de niveau se déplace en tout terrain.

8. Installation de régulation du niveau d'un véhicule automobile selon l'une des revendications 1 à 7, **caractérisée en ce qu'**une vérification du bon fonctionnement du compresseur (2) a lieu à intervalles réguliers d'utilisation du véhicule automobile dans lequel est située l'installation de régulation de niveau.

9. Installation de régulation du niveau d'un véhicule automobile selon l'une des revendications 1 à 8, **caractérisée en ce que** la durée de branchement du compresseur pendant la vérification du bon fonctionnement du compresseur (2) est limitée à 0,5 à 4 secondes et de préférence à 0,5 à 2 secondes.

10. Installation de régulation du niveau d'un véhicule automobile selon l'une des revendications 1 à 9, **caractérisée en ce que** l'appareil de commande de l'installation de régulation de niveau délivre un message d'erreur lorsque la vérification indique que le compresseur (2) ne fonctionne pas correctement.

11. Installation de régulation du niveau d'un véhicule automobile selon l'une des revendications 1 à 10, **caractérisée en ce que** l'installation de régulation de niveau est commutée en un programme de fonctionnement de secours lorsque la vérification indique que le compresseur (2) ne fonctionne pas correctement.
